# EUROPEAN PATENT SPECIFICATION

(11) **EP 2 637 437 B1**
(45) Date of publication and mention of the grant of the patent: **15.11.2017**
(21) Application number: 12158610.1
(22) Date of filing: 08.03.2012
(51) Int. Cl.: H04W 24/10

(54) **Methods for improved inter-radio access technology measurements**
Verfahren für verbesserte Zwischenfunkzugangstechnologiemessungen
Procédés d'amélioration des mesures de technologie d'accès inter-radio

(43) Date of publication of application: 11.09.2013
(73) Proprietor: BlackBerry Limited, Waterloo, ON N2K 0A7 (CA)
(72) Inventor: Ekici, Ozgur, Kanata, Ontario K2K 3K1 (CA); Islam, Muhammad Khaledul, Kanata, Ontario K2K 3K1 (CA)
(74) Representative: Hanna Moore + Curley

(56) References cited:
- US-A1- 2008 274 742
- US-A1- 2009 135 787
- US-A1- 2011 317 635

## Description

### FIELD OF THE DISCLOSURE

The present disclosure relates generally to wireless devices, and in particular, to inter-Radio Access Technology (inter-RAT) measurements.

### BACKGROUND

Wireless communication systems are widely deployed to provide various telecommunication services such as telephony, data, *etc.* The Universal Mobile Telecommunications System (UMTS) is a third generation (3G) cellular wireless technology developed by the 3^{rd} Generation Partnership Project (3GPP). The UMTS standard supports various air interfaces or radio access technologies (RATs) such as Wide-band Code Division Multiple Access (WCDMA) and Time Division Synchronous Code Division Multiple Access (TD-SCDMA).

In a typical wireless network deployment, 3G technology is overlaid on top of existing second generation (2G) wireless technologies. For example, an urban area may have radio link coverage from both 2G (such as the Global System for Mobile Communication (GSM)) and 3G (such as TD-SCDMA) whereas there may be only 2G coverage beyond the core urban area. Mobile devices are required to perform measurements of available RATs to provide seamless service. A mobile device seeing good TD-SCDMA downlink channel quality and requesting a high data rate in a High-Speed Downlink Packet Access (HSDPA) operation may be allocated with increased or all available downlink timeslots for its downlink traffic, leaving no or insufficient idle time periods for a reliable inter-RAT measurement. When such a mobile device moves closer to TD-SCDMA-GSM cell boundary, the inability or delay in performing GSM measurement may lead to dropping an ongoing service such as a voice call when the mobile device goes out of TD-SCDMA cell coverage.

U.S. patent application publication US 2009/0135787 A1 describes a mobile communication method of generating, by a mobile station device a gap section for suspending communication with a base station device and monitoring another base station device during the communication.

U.S. patent application publication 2008/0274742 A1 describes a method of performing measurements on handover candidate cells in a multi-system mobile radio access network environment by a mobile station operating in a present serving cell.

U.S patent application publication US 20110317635A1 describes a method for minimizing data loss in autonomous gaps, comprising: determining to receive signals from one or more base stations different from a serving base station and selecting a channel quality indicator (CQI) value for the serving base station and reporting the CQI value to the serving base station.

### SUMMARY

The present disclosure provides a method according to claim 1 and further provides a mobile device according to claim 9.

In one aspect of the present disclosure, the time available for measurements is increased by increasing the number of slots available for measurement.

In one aspect of the present disclosure, the measurements are Inter-RAT measurements.

In one aspect of the present disclosure, the triggering criterion is met when deteriorating cell radio link quality is detected.

In one aspect of the present disclosure, the triggering criterion is met when measured Channel Quality Indicator (CQI) is less than a pre-determined threshold value.

In one aspect of the present disclosure, the triggering criterion is met when measured signal strength falls below a threshold value.

In one aspect of the present disclosure, the threshold value is determined based on statistical data collected by the mobile device.

In one aspect of the present disclosure, the channel quality value is a Channel Quality Indicator (CQI) value.

In one aspect of the present disclosure, the triggering criterion is based on a mobility pattern of the mobile device.

In one aspect of the present disclosure, the indicated modulation format is quadrature phase shift keying (QPSK) or 16-Quadrature Amplitude Modulation (16-QAM) or 64-Quadature Amplitude Modulation (64-QAM).

In one aspect of the present disclosure, the high speed data is High Speed Downlink Packet Access (HSDPA).

### BRIEF DESCRIPTION OF THE DRAWINGS

The present disclosure will be better understood with reference to the drawings, in which:
**Figure 1** illustrates HSDPA timeslot allocation in a typical live network;
**Figure 2** is a process diagram illustrating an embodiment of the present disclosure to increase measurement gaps for improved inter-RAT measurements;
**Figure 3** illustrates an example of timeslot allocation for HSDPA high data rate scenario;
**Figure 4** illustrates an example of timeslot allocation for HSDPA low data rate resulting from the application of an embodiment of the present disclosure;
**Figure 5** illustrates another example of timeslot allocation for HSDPA low data rate resulting from the application of yet another embodiment of the present disclosure; and
**Figure 6** is a block diagram showing an example multi-mode mobile device used with the present disclosure.

### DETAILED DESCRIPTION

While the present disclosure is described below with regard to a TD-SCDMA network, this is not meant to be limiting and the embodiments described could be equally applied to other networks in which channel measurements are delayed based on lack of sufficient time available to perform measurements. As used herein, the time available for measurements is also referred to as an idle period, idle gap, idle interval, idle time slots, or measurement gap.

In TD-SCDMA networks, a single transceiver mobile device can perform inter-RAT measurements only during measurement gaps. During multi-Radio Access Bearers (multi-RAB) operations, i.e., Packet Switched (PS) and Circuit Switched (CS) operations, or HSDPA operations, inter-RAT measurements can be delayed significantly or may not even be possible due to lack of availability of an adequate measurement gap in a given subframe.

For instance, for PS-only HSDPA operation, two timeslots are typically allocated for uplink (UL) and downlink (DL) dedicated physical channels (DPCH) carrying signaling radio bearers.

A High-Speed Common Control Channel (HS-SCCH) on the DL can be allocated on a separate timeslot or share the same timeslot as DL-DPCH.

A High-Speed Shared Information Channel (HS-SICH) on the UL can occupy a separate timeslot or can share the same timeslot as UL-DPCH.

During active data transfer, High-Speed Physical Downlink Shared Channel (HS-PDSCH), which carries end-user data can theoretically occupy five timeslots on the DL. In practice, an HS-PDSCH typically occupies three timeslots on the DL. In accordance with the present disclosure, a device is actively connected during data transfer, and this may, for example, occur while the device is in CELL_DCH mode in one example.

In a scenario including mobile device mobility on radio access technology (RAT) borders, such timeslot allocation may make inter-RAT (such as GSM) measurements difficult or impossible, causing call drops due to the mobile device not being able to perform timely and reliable inter-RAT measurements and thereby not being able to perform inter-RAT handover.

According to 3GPP TS 25.123, a dual mode (TD-SCDMA and GSM/GPRS/EDGE) mobile device may be able to monitor up to 32 GSM cells distributed on 32 GSM carriers. Considering the fact that a typical TD-SCDMA cell size is quite small (typically 300m to 1 km), reliable and fast inter-RAT measurements are quite critical to provide similar service.

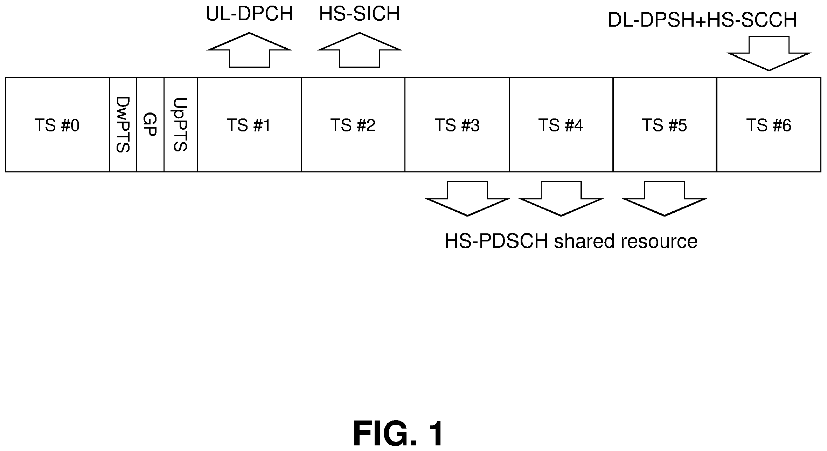

As an example, a HSDPA timeslot allocation as well as allocation of relevant physical channels in a typical commercial network is illustrated in **Figure 1****.** In **Figure 1****,** timeslot (TS) #0 is used for intra- and inter-frequency TD-SCDMA measurements. UL-DPCH is dedicated and occupies TS #1. In TS #2, HS-SICH is transmitted if there is data on the HSDPA DL for the mobile device in the previous timeslot. TS #2 can be used for inter-RAT measurements when there is no HSDPA DL data for the mobile device in the previous timeslot. TS #3, TS# 4, and TS #5 are used for DL shared channel. These timeslots can be used for inter-RAT measurements when there is no data for the mobile device. DL-DPCH is dedicated and occupies TS #6. If high-speed (HS) data flow is continuous, then the mobile device utilizing the allocation above will not be able to perform any inter-RAT measurement due to the absence of time for measurement.

Accordingly, in one aspect of the present disclosure, radio resource requirements can be reduced by having a mobile device artificially reporting a lower than actual Channel Quality Indicator (CQI) value to the network, implicitly requesting a smaller transport block size for a given modulation format. In an alternative aspect, a mobile device may not report to the network that the mobile device supports HSDPA or may declare to the network that the mobile device no longer supports HSDPA. Each of these embodiments is described below.

Thus, by reducing radio resource requirements for a given connection, measurement gaps are created which enable more timely and/or frequent inter-RAT measurements to be made.

The term "mobile device", as used herein, could be any wireless device, including, but not limited to a mobile station, user equipment (UE), personal digital assistant, data enabled cellular telephone, pager, laptop, among others.

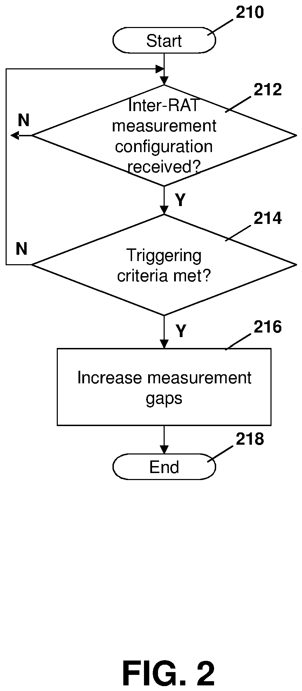

Reference is now made to **Figure 2** which shows an aspect of the present disclosure for increasing measurement gaps for inter-RAT measurements.

The process of **Figure 2** starts at block **210** and proceeds to block **212** in which the mobile device checks whether inter-RAT measurement configuration is received. If yes, the process then proceeds to block **214.** Otherwise, the process loops back to block **212.**

At block **214,** the mobile device checks whether triggering criteria for the present method are met. For example, the triggering criteria might be a cell radio link quality threshold. The triggering criteria might therefore be met when a deteriorating cell radio link quality is detected, for example in the case when the mobile device approaches cell boundary or when the mobile device is within a RAT which has a spotty coverage.

In one aspect, the triggering criterion in block **214** is met when the CQI value falls below a pre-determined threshold value.

In another embodiment, the triggering criterion is met when the signal strength from the serving cell falls below a threshold value determined from statistical data collected by the mobile device. For example, the mobile device can autonomously decide from experience or collected statistical data that if signal strength of the TD-SCDMA serving cell drops below a certain dBm value, then the probability of dropping CS calls in a TD-SCDMA cell is high.

In yet another embodiment, the triggering criterion could be based on a certain mobility pattern of the mobile device or statistical intelligence that the mobile device has. For instance, if in a given TD-SCDMA cell, the mobile device keeps dropping CS calls upon crossing the inter-RAT boundary and later finds a cell in a 2G network, then the next time when the mobile device encounters similar mobility pattern, the mobile device may recognize that the triggering criterion is met.

A person skilled in the art will appreciate that other triggering criteria may also be used to indicate deteriorating cell radio link quality or that longer measurement gaps are required to enable or accelerate inter-RAT measurements.

If the triggering criterion in block **214** is met, then the process proceeds to block **216** to create longer measurement gaps that can be used for inter-RAT measurements. Otherwise, if the triggering criterion is not met in block **214,** the process loops back to block **212.**

More details are provided below to describe some of the aspects in block **216** when a triggering criterion in block **214** is met, *e.g.*, when the Cell Quality Indicator (CQI) falls below a pre-determined threshold value.

In an aspect of the present disclosure, at block **214,** during the course of HSDPA operation, if the mobile device notices that the serving TD-SCDMA signal strength falls below a pre-determined threshold value and *inter-*RAT measurement is configured, then at block **216,** the mobile device may artificially report a lower CQI value to the network, causing the serving TD-SCDMA base station to decrease downlink PS data rate. The decreased PS data rate is expected to result in a reduction of allocated timeslots for HS-PDSCH, thereby creating longer measurement gaps for inter-RAT measurements.

In another aspect, at block **216,** the mobile device indicates a recommended modulation format (for example quadrature phase shift keying (QPSK) or 16 quadrature amplitude modulation (16-QAM) or 64 quadrature amplitude modulation (64-QAM)) and a transport block size in the HS-SICH message that can free up radio resources. For instance, given a certain transport block size, choosing 16-QAM over QPSK will free up radio resources. Similarly, for a given modulation format, indicating a smaller transport block size in the HS-SICH message will reduce radio resource requirements, thereby providing more measurement gaps.

In yet another aspect, at block **216,** the mobile device does not report certain capabilities such as the ability to receive on HSDPA when it reports its capability to the network, or the mobile device changes its capability declaring that it no longer supports a feature such as HSDPA through a message such as the *UE Capability Update* message on the uplink. When the mobile device then receives the *UE Capability Inform Confirm* message on the downlink, the UTRAN is expected to downgrade the mobile device PS connection to DPDCH (rather than HS-PDSCH) where more measurement gaps can be used to accelerate and/or enhance inter-RAT measurements.

From block **216,** the process then proceeds to block **218** where the process ends.

An example is provided below to illustrate how an aspect of the present disclosure can increase measurement gaps to enhance inter-RAT measurements.

According to 3GPP TS 25.123, 2G measurement periods are defined as 480ms. During this duration, the mobile device performs 2G measurements depending on the availability of measurement gaps. In practice, mobile devices cannot perform measurements at each subframe (5ms), but rather in multiples of subframes called "measurement scheduling period" of ∼40ms.

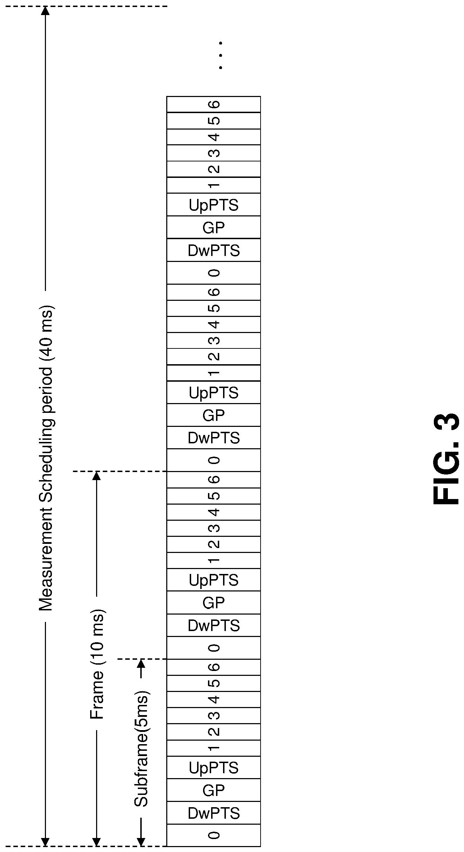

Reference is now made to **Figure 3****.** Within a measurement scheduling period, the mobile device performs various types of measurements, including serving cell, intra-frequency, inter-frequency and inter-RAT.

In order for the mobile device to meet the measurement accuracy requirements as defined in 3GPP TS 45.008, the mobile device will take at least 3 GSM carrier received signal strength indication (RSSI) samples per GSM carrier in the monitored set during the measurement period of 480ms. The mapping of the number of GSM carrier RSSI samples in each measurement gap to measurement gap length (in timeslots) is provided in **Table 1:**

**Table 1: Measurement gap length to GSM carrier RSSI sample mapping**

| **Measurement Gap Length (timeslots [TS])** | **Number of GSM carrier RSSI samples in each measurement gap** |
|---|---|
| 3 | 1 |
| 4 | 2 |
| 5 | 3 |

Referring to **Table 1,** if there is a measurement gap length of 4 timeslots then the mobile device should be able to collect 2 RSSI samples per carrier. This is a minimum requirement. In practice, some UE implementations may be able to collect 1 RSSI sample per carrier in a measurement gap of 2 timeslots.

Consider a numeric example taking into account **Table 1** and the following:
- GSM measurement period = 480 ms
- Measurement scheduling period = 40 ms
- A reliable/accurate GSM carrier measurement requires 3 carrier RSSI samples
- Different timeslot allocation scenarios (from sample live network log):
   i. Scenario 1: HSDPA high data rate
   ii. Scenario 2: HSDPA low data rate
   iii. Scenario 3: DPDCH data rate (one DL and one UL TS allocated)

In this numeric example, the number of GSM carriers a mobile device can reliably measure is calculated in each of the above scenarios to illustrate the benefits of the present methods and systems.

### Scenario 1: HSDPA high data rate (problematic use case):

Timeslot allocation for HSDPA high data rate scenario is illustrated in **Figure 3** as follows: TS #1 and TS #2 are assigned for UL. TS #3, TS #4, TS #5 and TS #6 are assigned for DL. TS #0 is used for serving cell intra-frequency and inter-frequency measurements. As shown in **Figure 3****,** if there is no interruption to the data flow during the GSM measurement period, there will be no IDLE interval for GSM carrier RSSI measurement. The mobile device will not be able to perform any GSM inter-RAT measurement regardless of the information conveyed in the *Measurement Control* message or pre-configured System Information Block 11 or 12. In case of sudden signal strength loss in the TD-SCDMA system, the mobile device will not be able to perform timely inter-RAT measurement, which may result in call drops as a result of not being able to trigger inter-RAT handover.

### Scenario 2: HSDPA low data rate:

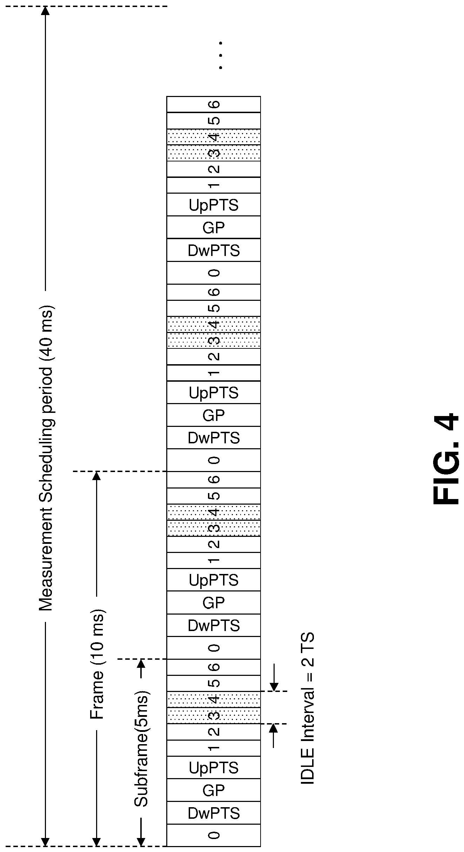

Using an embodiment of the present method, the mobile device can indirectly decrease the DL data rate, for example by reporting lower-than-actual CQI. **Figure 4** illustrates an example of TS allocation where the mobile device indirectly reduces the DL data rate so that 2 timeslots are freed up in the first subframe. In this scenario, the DL user data on an HSDPA channel is sent only on TS #5 and TS #6. The 2 IDLE timeslots, *i.e*., TS #3 and TS #4, are enough to obtain a single GSM carrier RSSI sample. If the mobile device performs single inter-RAT measurement in a given measurement scheduling period, then in a GSM measurement period of 480 ms, the mobile device can collect 12 GSM carrier RSSI samples. 12 GSM carrier RSSI measurements are enough for 4 reliable GSM carrier measurements (12 GSM carrier RSSI samples/3 GSM carrier RSSI samples per GSM carrier).

### Scenario 3: HSDPA low data rate:

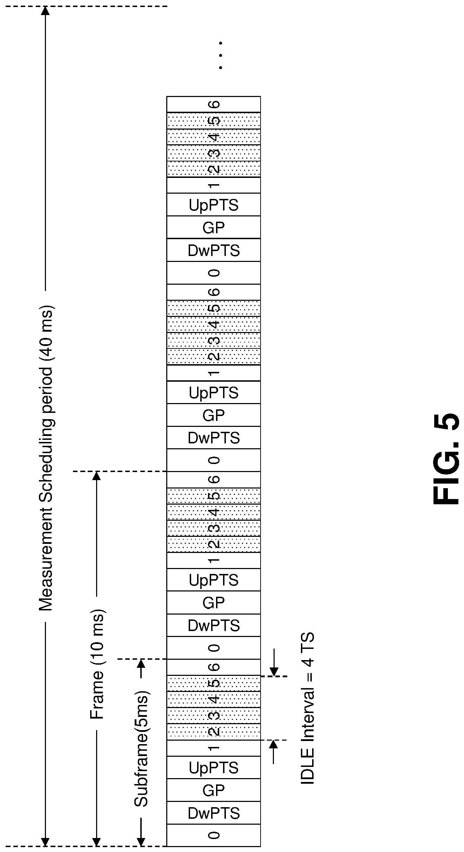

In the example of Scenario 3, when the mobile device approaches the RAT boundary, the mobile device downgrades its HSDPA capability through the *UE Capability Update* procedure in order to improve inter-RAT measurements. The mobile device either does not report its HSDPA capability to the network during connection establishment, or changes its capability on the fly to declare that it no longer supports HSDPA feature using the mobile device capability modification procedure as defined in 3GPP TS 25.331 section 8.1.6. This will provide more IDLE timeslots for inter-RAT measurements. In order to support 64 kbps UL and DL data rate, single timeslot assignment for each direction is sufficient. In **Figure 5****,** for example, TS #1 is assigned for UL and TS #6 is assigned for DL. If the mobile device performs a single inter-RAT measurement in each measurement scheduling period of 40ms, the mobile device will have 4 timeslots to perform inter-RAT measurement. Referring to **Table 1,** a measurement gap length of 4 timeslots is sufficient for 2 GSM carrier RSSI samples. Therefore, during a GSM measurement period of 480ms, the mobile device will be able to collect 24 GSM carrier RSSI samples which will be sufficient for 8 reliable GSM carrier measurements.

As will be appreciated by those in the art, the three scenarios above are merely provided as examples. In other scenarios the recommended modulation format and transport block size could be varied to create idle time slots. This could be combined with the examples of the scenarios above.

The various embodiments of the present method can be applied to increase the measurement gaps to facilitate inter-RAT measurements in a timely manner while on a TD-SCDMA system. Further, the methods may be applied both when a mobile device approaches a RAT boundary, and in other scenarios such as when a mobile device is within a RAT with spotty radio coverage. For instance, an established 2G network may provide seamless coverage in a given area. However, a TD-SCDMA network may have a spotty coverage. In the middle of a city, a mobile device that falls into a coverage hole within the TD-SCDMA network can only receive service from the 2G system. Therefore, in a hand-over scenario, the present method provides performance improvements not only along the RAT boundary but also within a RAT.

The above therefore provides for a mobile system in which a mobile device can increase the measurement gaps to allow for inter-RAT measurements. The measurement gaps can be created when a triggering criteria is met, such as, for example, channel conditions being below a threshold.

The increase in measurement gaps may be accomplished in various ways. For example, the reported channel quality can be artificially lowered at the mobile device to cause the network to reduce data throughput and thus create measurement gaps. Further, certain modulation schemes can be recommended by the mobile device to reduce the number of timeslots to be used and enable longer measurement gaps. Also, a transport block size can be recommended by the mobile device, whereby choosing a smaller transport block size requires less downlink timeslots and enables longer measurement gaps.

Also, certain capabilities of the mobile device can be suppressed, either by not reporting such capabilities or by signalling that such capabilities are no longer available. The suppression of the capabilities can create further measurement gaps. For example, if the capability is HSDPA, a mobile indicating it does not support HSDPA can increase the number of IDLE timeslots per subframe.

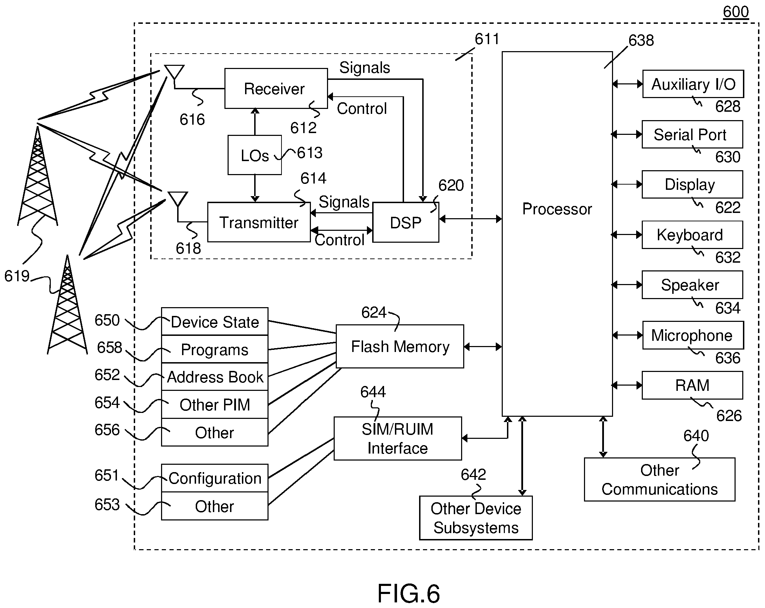

An exemplary multi-mode mobile device for use with the embodiments above is illustrated with reference to **Figure 6****.** The multi-mode mobile device of **Figure 6** is however not meant to be limiting, but is provided for illustrative purposes. Other multi-mode mobile devices could also be used.

Multi-mode mobile device **600** is typically a two-way wireless communication device having at least voice and data communication capabilities. Multi-mode mobile device **600** may have the capability to communicate with other computer systems on the Internet. Depending on the exact functionality provided, the mobile device **600** may be referred to as a data messaging device, a two-way pager, a wireless e-mail device, a cellular telephone with data messaging capabilities, a wireless Internet appliance, a wireless device, a user equipment, or a data communication device, as examples.

Where mobile device **600** is enabled for two-way communication, it can incorporate a communication subsystem **611,** including both a receiver **612** and a transmitter **614,** as well as associated components such as one or more antenna elements **616** and **518,** local oscillators (LOs) **613,** and a processing module such as a digital signal processor (DSP) **620.** In some embodiments, communication subsystem **611** may allow for communications with a plurality of RATs. In other embodiments, one or more further communications subsystem **660** supporting other RATs could be provided on mobile device **600.** As will be apparent to those skilled in the field of communications, the particular design of the communication subsystem **611** or **660** will be dependent upon the communication network in which the device is intended to operate. For example, mobile device **600** may include a communication subsystem **611** designed to operate within the GPRS network or UMTS network. In some embodiments, a mobile device **600** supporting WiFi could include a further communications subsystem **650.**

Network access requirements will also vary depending upon the type of network **619.** For example, In UMTS and GPRS networks, network access is associated with a subscriber or user of mobile device **600.** For example, a GPRS mobile device therefore requires a subscriber identity module (SIM) card in order to operate on a GPRS network. In UMTS a USIM or SIM module is required. In CDMA a removable user identity module (RUIM) card or a SIM card is required. These will be referred to as a UIM interface herein. Without a valid UIM interface, a mobile device may not be fully functional. Local or non-network communication functions, as well as legally required functions (if any) such as emergency calling, may be available, but mobile device **600** will be unable to carry out any other functions involving communications over the network **619.** The UIM interface **644** is normally similar to a card-slot. The UIM card can hold many key configuration **651,** and other information **653** such as identification, and subscriber related information.

When required network registration or activation procedures have been completed, mobile device **600** may send and receive communication signals over the network **619.** Signals received by antenna **616** through communication network **619** are input to receiver **612,** which may perform such common receiver functions as signal amplification, frequency down conversion, filtering, channel selection and the like, and in the example system shown in **Figure 6****,** analog to digital (A/D) conversion. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network **619** via antenna **618.** DSP **620** not only processes communication signals, but also provides for receiver and transmitter control. For example, the gains applied to communication signals in receiver **612** and transmitter **614** may be adaptively controlled through automatic gain control algorithms implemented in DSP **620.**

Network **619** may further communicate with multiple systems, including a server and other elements (not shown). For example, network **619** may communicate with both an enterprise system and a web client system in order to accommodate various clients with various service levels.

Mobile device **600** can include a microprocessor **638** which controls the overall operation of the device. Communication functions, including data and voice communications, are performed through communication subsystem **611.** Microprocessor **638** also interacts with further device subsystems such as the display **622,** flash memory **624,** random access memory (RAM) **626,** auxiliary input/output (I/O) subsystems **628,** serial port **630,** keyboard **632,** speaker **634,** microphone **636,** a short-range communications subsystem **640** and any other device subsystems generally designated as **642.** Microprocessor **638** can further interact with communications subsystem **611** and with software stored in a memory such as flash memory **624** to perform the methods described herein.

Some of the subsystems shown in **Figure 6** perform communication-related functions, whereas other subsystems may provide "resident" or on-device functions. Notably, some subsystems, such as keyboard **632** and display **622,** for example, may be used for both communication-related functions, such as entering a text message for transmission over a communication network, and device-resident functions such as a calculator or task list.

Operating system software used by the microprocessor **638** may be stored in a persistent store such as flash memory **624,** which may instead be a read-only memory (ROM) or similar storage element (not shown). Those skilled in the art will appreciate that the operating system, specific device applications, or parts thereof, may be temporarily loaded into a volatile memory such as RAM **626.** Received communication signals may also be stored in RAM **626.** Further, a unique identifier is also preferably stored in read-only memory.

As shown, flash memory **624** can be segregated into different areas for both computer programs **658** and program data storage **655, 652, 654** and **656.** These different storage types indicate that each program can allocate a portion of flash memory **624** for their own data storage requirements. Microprocessor **638,** in addition to its operating system functions, may enable execution of software applications on the mobile device. A predetermined set of applications that control basic operations, including data and voice communication applications for example, may be installed on mobile device **600** during manufacturing. One software application may be a personal information manager (PIM) application having the ability to organize and manage data items relating to the user of the mobile device such as, but not limited to, e-mail, calendar events, voice mails, appointments, and task items. Other applications may include multimedia application, social networking applications, instant messaging application, among others.

In a data communication mode, a received signal such as a text message or web page download may be processed by the communication subsystem 611 and input to the microprocessor **638,** which may further process the received signal for output to the display **622,** or alternatively to an auxiliary I/O device **628.** A user of mobile device **600** may also compose data items such as email messages for example, using the keyboard **632,** which in one embodiment is a complete alphanumeric keyboard or telephone-type keypad, in conjunction with the display **622** and possibly an auxiliary I/O device **628.** Such composed items may then be transmitted over a communication network through the communication subsystem **611.**

For voice communications, overall operation of mobile device **600** is similar, except that received signals would typically be output to a speaker **634** and signals for transmission would be generated by a microphone **636.** Alternative voice or audio I/O subsystems, such as a voice message recording subsystem, may also be implemented on mobile device **600.** Although voice or audio signal output is generally accomplished primarily through the speaker **634,** display **622** may also be used to provide an indication of the identity of a calling party, the duration of a voice call, or other voice call related information for example.

Serial port **630** in **Figure 6** would normally be implemented in a personal digital assistant (PDA)-type mobile device for which synchronization with a user's desktop computer (not shown) may be desirable. Such a port **630** would enable a user to set preferences through an external device or software application and would extend the capabilities of mobile device **600** by providing for information or software downloads to mobile device **600** other than through a wireless communication network. The alternate download path may for example be used to load an encryption key onto the device through a direct and thus reliable and trusted connection to thereby enable secure device communication.

Alternatively, serial port **630** could be used for other communications, and could include as a universal serial bus (USB) port. An interface is associated with serial port **630.**

Other communications subsystems **640,** such as a short-range communications subsystem, is a further optional component which may provide for communication between mobile device **600** and different systems or devices, which need not necessarily be similar devices. For example, the subsystem **640** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a mobile device (600), the method comprising:
receiving (212) inter-radio access technology, RAT, measurement configuration information from the network;
when the device is actively connected, determining (214) whether a triggering criterion is met, based on the received information; and
if the triggering criterion is met (214), increasing (216) the time available for measurements, wherein the increasing comprises reporting an incorrect capability to the network, the incorrect capability indicating that the mobile device does not support High-Speed Downlink Packet Access, HSDPA, while the mobile device does support HSDPA.

2. The method of claim 1, wherein the time available for measurements is increased by increasing the number of slots available for measurement.

3. The method of claim 1, wherein the measurements are Inter-RAT measurements.

4. The method of any one of claims 1 to 3, wherein the triggering criterion is met when deteriorating cell radio link quality is detected.

5. The method of any one of claims 1 to 3, wherein the triggering criterion is met when measured channel quality value is less than a pre-determined threshold value.

6. The method of any one of claims 1 to 3, wherein the triggering criterion is met when measured signal strength falls below a threshold value.

7. The method of claim 6, wherein the threshold value is determined based on statistical data collected by the mobile device (600).

8. The method of any one of claims 1 to 7 wherein the triggering criterion is based on a mobility pattern of the mobile device (600).

9. A mobile device (600) comprising, a processor (638); and
a communications subsystem (611),
wherein the processor (638) and communications subsystem (611) cooperate to perform the steps of the method of any one of claims 1 to 8.

## Patentansprüche

1. Verfahren an einem Mobilgerät (600), wobei das Verfahren umfasst:
Empfangen (212) von Messkonfigurationsinformationen für Inter-Funk-Zugangstechnologie, RAT, vom Netzwerk;
wenn das Gerät aktiv angebunden ist, Ermitteln (214) auf Basis der empfangenen Informationen, ob ein Auslösekriterium erfüllt ist; und
falls das Auslösekriterium erfüllt ist (214), Erhöhen (216) der für Messungen verfügbaren Zeit, wobei das Erhöhen ein Berichten einer falschen Leistungsfähigkeit an das Netzwerk umfasst, wobei die falsche Leistungsfähigkeit anzeigt, dass das Mobilgerät High-Speed Downlink Packet Access, HSDPA, nicht unterstützt, während das Mobilgerät HSDPA unterstützt.

2. Verfahren nach Anspruch 1, wobei die für Messungen verfügbare Zeit durch Erhöhen der Anzahl der für Messungen verfügbaren Schlitze erhöht wird.

3. Verfahren nach Anspruch 1, wobei die Messungen Inter-RAT-Messungen sind.

4. Verfahren nach einem der Ansprüche 1 bis 3, wobei das Auslösekriterium erfüllt ist, wenn eine Verschlechterung einer Zellen-Funkverbindungsqualität erkannt wird.

5. Verfahren nach einem der Ansprüche 1 bis 3, wobei das Auslösekriterium erfüllt ist, wenn ein gemessener Kanalqualitätswert kleiner als ein vorbestimmter Schwellenwert ist.

6. Verfahren nach einem der Ansprüche 1 bis 3, wobei das Auslösekriterium erfüllt ist, wenn eine gemessene Signalstärke unter einen Schwellenwert fällt.

7. Verfahren nach Anspruch 6, wobei der Schwellenwert auf Basis von vom Mobilgerät (600) gesammelten statistischen Daten bestimmt wird.

8. Verfahren nach einem der Ansprüche 1 bis 7, wobei das Auslösekriterium auf einem Mobilitätsmuster des Mobilgeräts (600) basiert.

9. Mobilgerät (600), umfassend,
einen Prozessor (638); und
ein Kommunikations-Teilsystem (611),
wobei der Prozessor (638) und das Kommunikations-Teilsystem (611) zusammenarbeiten, um die Schritte des Verfahrens nach einem der Ansprüche 1 bis 8 durchzuführen.

## Revendications

1. Procédé exécuté sur un dispositif mobile (600), le procédé comprenant les étapes consistant à :
recevoir (212) du réseau des informations de configuration de mesure pour transfert entre différentes technologies d'accès radio, RAT pour « *Radio Access Technology* » ;
alors que le dispositif est connecté activement, déterminer (214) si un critère de déclenchement est satisfait, à partir des informations reçues ; et
si le critère de déclenchement est satisfait (214), augmenter (216) le temps disponible pour des mesures, dans lequel l'étape d'augmentation comprend l'étape consistant à rapporter une capacité incorrecte au réseau, la capacité incorrecte indiquant que le dispositif mobile ne supporte pas l'accès descendant à haut débit en mode paquets, HSDPA pour « *High Speed Downlink Packet Access* », alors que le dispositif mobile supporte l'accès HSDPA.

2. Procédé selon la revendication 1, dans lequel le temps disponible pour des mesures est augmenté en augmentant le nombre de créneaux temporels disponibles pour la mesure.

3. Procédé selon la revendication 1, dans lequel les mesures sont des mesures entre technologies RAT différentes.

4. Procédé selon l'une quelconque des revendications 1 à 3, dans lequel le critère de déclenchement est satisfait lorsqu'est détectée une détérioration de la qualité de la liaison radio avec la cellule.

5. Procédé selon l'une quelconque des revendications 1 à 3, dans lequel le critère de déclenchement est satisfait lorsque la valeur de qualité mesurée sur le canal est inférieure à une valeur de seuil prédéterminée.

6. Procédé selon l'une quelconque des revendications 1 à 3, dans lequel le critère de déclenchement est satisfait lorsque l'intensité du signal mesuré chute au-dessous d'une valeur de seuil.

7. Procédé selon la revendication 6, dans lequel la valeur de seuil est déterminée en fonction de données statistiques recueillies par le dispositif mobile (600).

8. Procédé selon l'une quelconque des revendications 1 à 7, dans lequel le critère de déclenchement est fondé sur un schéma de mobilité du dispositif mobile (600).

9. Dispositif mobile (600) comprenait
un processeur (638) ; et
un sous-système de communication (611) ;
dans lequel le processeur (638) et le sous-système de communication (611) coopèrent pour exécuter les étapes du procédé selon l'une quelconque des revendications 1 à 8.
